# EUROPÄISCHE PATENTANMELDUNG

(11) **EP 1 104 088 A2**
(43) Veröffentlichungstag der Anmeldung: **30.05.2001**
(21) Anmeldenummer: 00122583.8
(22) Anmeldetag: 17.10.2000
(51) Int. Cl.: H02P 7/62, H02P 7/638

(54) **Pumpe mit Vibrationssensor**

(30) Priorität: 25.11.1999 DE 19956768
(71) Anmelder: WILO GmbH, D-44263 Dortmund (DE)
(72) Erfinder: Wolff, Christian, 44149 Dortmund (DE)
(74) Vertreter: COHAUSZ HANNIG DAWIDOWICZ & PARTNER

(57) **Zusammenfassung**

Verfahren zum Betrieb eines in seiner Leistung einstellbaren, insbesondere regelbaren, Elektromotors, wobei eine Leistung als Sollwert vorgegeben und von einer Steuer- oder Regelelektronik 8 eingestellt wird, wobei Vibrationen des Elektromotors 1 oder mit dem Elektromotor verbundener Teile 4 im Betrieb gemessen werden und der Meßwert der Elektronik 8 zugeführt wird und wobei die Leistung von der Elektronik 8 zur Reduzierung der Vibrationen innerhalb eines Toleranzbereiches um den vorgegebenen Sollwert variiert wird.

## Beschreibung

Die vorliegende Erfindung betrifft ein Verfahren zum Betrieb eines in seiner Leistung einstellbaren, insbesondere eines regelbaren, Elektromotors. Die Erfindung betrifft gleichfalls einen entsprechenden Elektromotor.

Insbesondere bei Asynchronmotoren, wie sie beispielsweise für den Antrieb kleiner Kreiselpumpen in Heizungskreisläufen verwendet werden, ist es bekannt, durch Kombination von Halbwellen des versorgenden Wechselstromes verschiedene Leistungsstufen einzustellen. So kann die Leistung und damit die Drehzahl dadurch eingestellt werden, daß der Strom in der Hauptwicklung reduziert wird, indem die Hauptwicklung ihren Betriebsstrom aus Anschlüssen an der Hilfswicklung bezieht. Die Hilfswicklung besteht dabei beispielsweise aus zwei Hälften gleicher Impedanz, so daß an drei Stellen der Hilfswicklung abgegriffen werden kann, was entsprechend mit drei unterschiedlichen Leistungsstufen einhergeht. Mit diesen drei Leistungsstufen kann jedoch keine kontinuierliche Regelung der Förderhöhe in beliebigen Systemen erreicht werden.

Um eine feinere Teilung der Leistungsstufen zu erhalten, ist es möglich, mittels einer Elektronik in schnellem Wechsel zwischen den einzelnen Leistungsstufen umzuschalten. Dieser Wechsel erzeugt während der Umschaltung Störspannungen, die andere Geräte empfindlich beeinflussen und umfangreiche und entsprechend teure Filtermaßnahmen erzwingen. Um den Wechsel im Schaltmoment bezüglich der Störungen zu optimieren, ist es bekannt, ihn zwischen zwei Leistungsstufen im Moment des Stromnulldurchgangs durchzuführen. Dadurch entstehen jedoch Schwankungen im Drehmoment, die insbesondere beim Antrieb von Kreiselpumpen ihrerseits Druckschwankungen und Geräusche im System hervorrufen.

Um die Anzahl der möglichen Leistungsstufen weiter zu erhöhen, ist es bekannt, eine Folge von Stromhalbwellen zu generieren, die aus einer Mischung der Leistungsstufen besteht. Ein solches Zündmuster kann prinzipiell aus einer beliebig langen Folge von Stromhalbwellen und damit aus einer beliebigen Kombination großer und kleiner Stromhalbwellen erzeugt werden. Diese sehr langen Zyklen lassen zwar eine entsprechend feine Unterteilung der Leistungsstufen zu, erzeugen aber einen höheren Geräuschpegel im System durch ihre vergleichsweise niedrige Wiederholfrequenz, die meist im Resonanzbereich mechanischer Systeme liegt. Das Problem der Resonanz wird durch Zündmuster mit kürzeren Zyklen vermieden, wobei in den kurzen Zyklen auch nur wenig unterschiedliche Zündmuster und damit Leistungsstufen generiert werden können. So gehen Zündmuster hoher Wiederholfrequenz mit einem kleinen Geräuschpegel einher, während Zündmuster in langen Folgen mit entsprechend geringerer Wiederholrate die Gefahr der akustischen Resonanz bedingen.

Aufgabe der Erfindung ist es nunmehr, ein Verfahren zum Betrieb eines Elektromotors zu schaffen, das mit geringem elektronischen Aufwand die Ansteuerung des Elektromotors mit Zündmustern langer Wiederholungszyklen, das heißt mit hoher Auflösung ermöglicht und dabei eine große Zuverlässigkeit trotz geringer Herstellungskosten des Elektromotors gewährleistet. Es ist gleichfalls die Aufgabe der Erfindung, einen zur Durchführung des Verfahrens geeigneten Elektromotor zu schaffen.

Diese Aufgaben werden durch das Verfahren nach Anspruch 1 und durch den Elektromotor nach Anspruch 12 gelöst.

Der besondere Vorteil der Erfindung resultiert daraus, daß bei dem erfindungsgemäßen Verfahren die Vibration, das heißt, die Geräuschentwicklung des Elektromotors bzw. eines damit verbundenen Teiles während des Betriebes, insbesondere kontinuierlich, gemessen wird und die Leistungsstufe im Hinblick auf eine Reduzierung der Geräuschentwicklung entsprechend justiert wird. Dabei wird die Leistungsstufe vorteilhafterweise im Toleranzbereich eines vorgebbaren Sollwertes variiert. Der wesentliche Vorteil des erfindungsgemäßen Verfahrens liegt somit in der Minimierung der Geräuschentwicklung des Elektromotors, wobei das Verfahren für beliebige Arten von Elektromotoren einsetzbar ist.

Besonders vorteilhaft läßt sich das Verfahren bei Elektromotoren anwenden, die zum Betrieb elektrisch betriebener Kreiselpumpen insbesondere zur Versorgung eines Heizungssystems eines Gebäudes eingesetzt werden. Die vom Motor erzeugten und vom System übertragenen Geräusche oder die durch Druckschwankungen im System hervorgerufenen Geräusche können durch die Messung des Körperschalls der Komponenten Elektromotor und/oder Pumpe und/oder System automatisch reduziert werden, ohne daß es zu einer Einbuße der Leistung oder zu einem unnötigen Energieaufwand kommt. Mit dem erfindungsgemäßen Verfahren ist es daher möglich, ein solches Heizungssystem automatisch sowohl hinsichtlich der Leistung als auch hinsichtlich der Geräuschentwicklung zu optimieren.

Auch wenn es möglich ist, die Vibrationen von Elektromotor oder von damit verbundenen Teilen durch Messung anderer Systemparameter zu bestimmen, so kann das System besonders einfach verifiziert werden, wenn die Vibrationen direkt mittels eines entsprechenden Sensors gemessen werden. Dabei ist es vorteilhaft, den Sensor unmittelbar am Elektromotor oder an einem mit dem Elektromotor in mechanischer Verbindung stehenden Bauteilteil, beispielsweise dem Pumpengehäuse oder einem Rohr, anzubringen. Derartige Sensoren sind in sehr einfachen und preiswerten Ausführungsformen auf dem Markt erhältlich und können relativ problemlos in die Steuer- und Regelelektronik der Elektromotoren eingebunden werden.

Als besonders einfache Sensoren können handelsübliche Piezosignalgeber verwendet werden, die in einer besonders vorteilhaften Ausführungsform zwei metallische Kontaktflächen mit einem dazwischen angeordneten Piezoelement aufweisen. Diese Signalgeber können an beliebigen Stellen auf die entsprechenden Teile aufgeklebt oder aufgepreßt bzw. auf der Platine des Motors angeordnet werden. Die handelsüblichen Piezoelemente sind besonders kostengünstig und zuverlässig, so daß die Herstellungskosten des Systems kaum beeinflußt werden. Mit der Art der Anbringung ist es möglich, die Sensoren so zu justieren, daß sie ausschließlich auf Vibrationen des Systems sowie auf Berührungen reagieren und gegenüber äußeren Störgeräuschen und gegenüber Rückkopplung unempfindlich sind. Dabei ist es der besondere Vorteil der Sensoren, beispielsweise der Sensoren mit Piezoelementen, daß im Gegensatz zu herkömmlichen Mikrophonen eine Übertragung von Vibrationen über die Luft nicht möglich ist, sondern, daß eine mechanische Kopplung notwendig ist. Aus diesem Grund ist die Gefahr der Rückkopplung minimiert.

Mittels der Auswerteelektronik kann das Signal des Sensors auch einer Frequenzanalyse oder einer Amplitudenanalyse unterzogen werden, so daß eine Sensibilität auf spezielle Frequenzen geschaffen werden kann. Damit ist es möglich, beispielsweise externe Geräusche zu identifizieren und von der Steuerung abzukoppeln.

Wegen der geringen Kosten und des einfachen elektronischen Aufwandes läßt sich das Verfahren besonders vorteilhaft bei Asynchronmotoren einsetzen, deren Leistungsstufen durch unterschiedliche Zündmuster eingestellt werden können. Dabei wird ein Zündmuster innerhalb eines Zyklus aus einzelnen Halbwellen insbesondere diskreter Amplitudenunterschiede zusammengefügt. Da eine vorgegebene Leistungsstufe durch verschiedene Zündmuster realisiert werden kann, ist es möglich, das hinsichtlich einer geringen Geräuschentwicklung optimale Muster aufgrund der Vibrationsmessung auszuwählen.

Bei den zur Auswahl stehenden Zündmustern ist das Integral über den Stromfluß und damit die Leistung innerhalb eines Toleranzspielraumes gleich. Dabei hängt es vom jeweiligen System ab, ob ein bestimmtes Zündmuster mehr oder weniger Vibrationen und damit Geräusche erzeugt. Beim Einsatz des Verfahrens in elektrisch betriebenen Kreiselpumpen ist es dabei vorteilhaft, daß die Trägheit des Systems einen gewissen Ausgleich über die Bewegungen hervorruft.

In einer besonders einfachen Ausführungsform ist es möglich, dem Verfahren einen Satz unterschiedlicher Zündmuster vorzugeben, aus denen die Elektronik das im Hinblick auf die Geräuschminimierung geeignete aussucht. Die Zündmuster können in einer Datei abgelegt werden und in einem einfachen Speicherbaustein gespeichert werden. Dabei läßt sich die Anzahl sinnvoll zu realisierender Zündmuster bezüglich ihrer Länge und der Art des Musters entsprechend der damit zu erzielenden Leistung einschränken. Mit dem Verfahren kann dann selbsttätig ein Zündmuster aus dem Satz ausgewählt werden, wobei dieses die vorgegebene Förderhöhe innerhalb der Toleranzen erreichen muß und wobei ein bestimmtes Maß an Vibrationen bzw. eine bestimmte Lautstärke nicht überschritten werden darf.

Es ist besonders vorteilhaft, wenn die Elektronik nicht nur die Auswahl aus einem Satz vorgegebener Zündmuster hat, sondern wenn es der Elektronik möglich ist, selber neue Zündmuster zu generieren. Dazu ist es vorteilhaft, wenn sich das Verfahren der Unterstützung eines in die Elektronik integrierten Mikroprozessors bedient, auf dem ein Programm zur Generation der Zündmuster läuft. Dabei kann es vorteilhaft sein, Grenzwerte für die Länge des Zündmusters oder andere Kriterien für die Art das Muster vorzugeben. Bei eingestellter Förderhöhe wird der Mikroprozessor das optimale Muster unter Minimierung der Vibration generieren. In dem Programm können in einer besonders vorteilhaften Ausführung selbstlernende Algorithmen implementiert sein, die auf die Optimierung der Zündmuster ausgerichtet sind. Durch das Programm wird sich der Motor schrittweise einen Idealvorrat an Zündmustern erarbeiten. Jedes mit einem solchen Motor betriebene hydraulische System könnte über seine gesamte Lebensdauer hinweg optimal angesteuert werden.

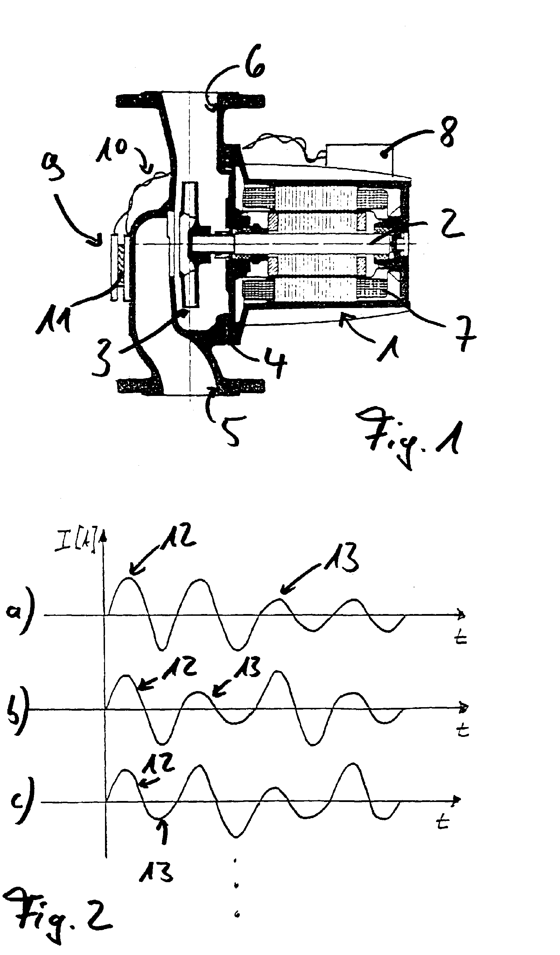

Ein Ausführungsbeispiel der Erfindung wird anhand der Figuren 1 und 2 im folgenden näher beschrieben.

Es zeigen:
- **Figur 1:**: eine von einem Elektromotor betriebene Kreiselpumpe mit Vibrationssensor und
- **Figur 2:**: verschiedene Zündmuster.

In der Figur 1 ist ein Elektromotor in Form eines Spalttopfmotors 1 gezeigt, der über eine Welle 2 ein Pumpenlaufrad 3 betreibt. Das Pumpenlaufrad ist in einer vom Pumpengehäuse 4 umgebenen Laufradkammer angeordnet und pumpt das Wasser vom Ansaugstutzen 5 zum Auslaßstutzen 6. Der Stator 7 des Spalttopfmotors 1 wird über eine Elektronik 8 mit Wechselstrom versorgt.

Die Elektronik 8 beinhaltet einen Regeler, dem die von einem Sensor 9 gemessenen Amplituden der Vibrationen des Pumpengehäuses 4 als Regeleingangsgröße über ein Kabel 10 zugeführt werden. Der Sensor 9 weist zwei leitende Metallplatten auf, zwischen denen ein Piezoelement 11 angeordnet ist. Eine der Platten ist direkt auf die Stirnseite des Pumpengehäuses 4 aufgeklebt, so daß der Sensor 9 den Vibrationen des Pumpengehäuses unmittelbar ausgesetzt ist. Die Regelausgangsgröße ist dabei eine Leistungsänderung, wobei mittels der Regelausgangsgröße die Leistung des Elektromotors innerhalb eines vorgebbaren Toleranzbereiches im Hinblick auf eine Erzeugung geringerer Vibrationen veränderbar ist.

Über die Elektronik 8 wird die Wicklung des Stators 7 mit einem Wechselstrom versorgt, dessen Ablauf in Figur 2 an Beispiel dreier Zündmuster a), b) und c), die eine Länge von je vier Schwingungen aufweisen, dargestellt ist. Diese Zündmuster sind zusammengesetzt einerseits aus Halbwellen einer großen Amplitude 12 und andererseits aus Halbwellen einer kleinen Amplitude 13. Ein Zündmuster ist jeweils aus acht Halbwellen zusammengesetzt, wobei je vier große Halbwellen 12 und je vier kleine Halbwellen 13 zu gleicher Leistung addiert werden.

Das Muster Figur 2a, das zwei getrennte Blöcke aus je vier großen Halbwellen und anschließenden vier kleinen Halbwellen zusammengesetzt ist, gewährleistet ein gutes hydraulisches Verhalten der Pumpe, wobei jedoch diese Blockansteuerung wegen der harten Übergänge von Halbwellen großer Amplitude zur Halbwellen kleiner Amplitude mit einer erheblichen Geräuscherzeugung einhergeht.

Bezüglich des Geräuschverhaltens ist die gleichmäßige Mischung der Halbwellen nach Figur 2b oder die Alternativform nach 2c erheblich besser. Im Hinblick auf die Geräuschoptimierung bei vorgegebener Leistung kann die Elektronik erfindungsgemäß weitere Zündmuster dieser Art generieren.

## Patentansprüche

1. Verfahren zum Betrieb eines in seiner Leistung einstellbaren, insbesondere regelbaren, Elektromotors,
**dadurch gekennzeichnet,**
- daß eine Leistung als Sollwert vorgegeben und von einer Steuer- oder Regelelektronik (8) eingestellt wird,
- daß Vibrationen des Elektromotors (1) oder mit dem Elektromotor verbundener Teile (4) im Betrieb gemessen werden und der Meßwert der Elektronik (8) zugeführt wird und
- daß die Leistung von der Elektronik (8) zur Reduzierung der Vibrationen innerhalb eines Toleranzbereiches um den vorgegebenen Sollwert variiert wird.

2. Verfahren nach Anspruch 1,
**dadurch gekennzeichnet**, daß die Vibrationen mittels eines Sensors (9) gemessen werden, der an dem Elektromotor (1) oder an einem mit dem Elektromotor in Wirkverbindung stehenden Bauteil (4) angebracht ist.

3. Verfahren nach Anspruch 1 oder 2,
**dadurch gekennzeichnet**, daß der Elektromotor (1) ein Asynchronmotor ist.

4. Verfahren nach Anspruch 3,
dadurch gekennzeichnet,daßdieLeistungdes Asynchronmotors (1) über ein Zündmuster aus einer Abfolge einzelner Halbwellen (12, 13) eines Wechselstromes eingestellt wird.

5. Verfahren nach Anspruch 4,
**dadurch gekennzeichnet**, daß die Amplitude der Halbwellen (12,13) in diskreten Stufen variierbar ist.

6. Verfahren nach Anspruch 5,
**dadurch gekennzeichnet**, daß der Elektronik (8) eine Anzahl verschiedener Zündmuster vorgebbar sind, wobei die Zündmuster in einem Speicherelement abgelegt werden .

7. Verfahren nach Anspruch 5 oder 6,
**dadurch gekennzeichnet**, daß die Elektronik (8) einen Mikroprozessor aufweist, der anhand eines Programmes die Statorwicklung mit verschiedenen Zündmustern bei vorgegebener Leistung beaufschlagt, wobei das Programm dasjenige Zündmuster sucht, das die geringsten Vibrationen erzeugt.

8. Verfahren nach einem der vorherigen Ansprüche,
**dadurch gekennzeichnet**, daß das Programm in Abhängigkeit von der vorgegebenen Leistung selber Zündmuster generiert.

9. Verfahren nach einem der vorherigen Ansprüche,
**dadurch gekennzeichnet**, daß das Programm selbstlernende Algorithmen aufweist.

10. Verfahren nach einem der vorherigen Ansprüche,
dadurch gekennzeichnet,daßdieGrößedes Toleranzbereiches vorgebbar ist.

11. Verfahren nach einem der vorherigen Ansprüche,
**dadurch gekennzeichnet**, daß die Vibrationen kontin uierlich gemessen werden.

12. Elektromotor mit einstellbarer Leistung, insbesondere zur Anwend ung des Verfahrens nach einem der Ansprüche 1 bis 11,
**gekennzeichnet durch** einen Regler, dessen Regeleingangsgröße der Amplitude der Vibrationen des Elektromotors entspricht und dessen Regelausgangsgröße einer Leistungsänderung entspricht, wobei mittels der Regelausgangsgröße die Leistung des Elektromotors innerhalb eines vorgebbaren Toleranzbereiches im Hinblick auf geringere Vibrationen veränderbar ist.

13. Elektromotor nach Anspruch 12,
**gekennzeichnet durch** einen Vibrationssensor (9), der an dem Elektromotor (1) oder an einem mit dem Elektromotor (1) in Wirkverbindung stehenden Bauteil (4) angebracht ist.

14. Elektromotor nach Anspruch 13,
**dadurch gekennzeichnet**, daß der Vibrationssensor (9) ein Piezoelement (11) aufweist.

15. Verwendung eines Elektromotors nach einem der Ansprüche 1 bis 14 zum Antrieb einer Kreiselpumpe.
